(19) Europäisches Patentamt

European Patent Office

Office européen des brevets

(11) **EP 1 653 101 A1**

(12) **EUROPEAN PATENT APPLICATION**
published in accordance with Art. 158(3) EPC

(43) Date of publication:
**03.05.2006 Bulletin 2006/18**

(51) Int Cl.:
*F16D 3/40* (1968.09)      *B62D 1/20* (1968.09)

(21) Application number: **04745624.9**

(22) Date of filing: **01.06.2004**

(86) International application number:
**PCT/JP2004/007901**

(87) International publication number:
**WO 2004/113752 (29.12.2004 Gazette 2004/53)**

(84) Designated Contracting States:
**AT BE BG CH CY CZ DE DK EE ES FI FR GB GR HU IE IT LI LU MC NL PL PT RO SE SI SK TR**

(30) Priority: **20.06.2003 JP 2003176248**

(71) Applicants:
• **NSK Ltd.**
**Tokyo 141-8560 (JP)**
• **NSK Steering Systems Co., Ltd.**
**Tokyo 141-8560 (JP)**

(72) Inventors:
• **SEKINE, Hiroshi,**
**c/o NSK Steering Systems Co. Ltd.**
**Maebashi-shi,**
**Gunma 371-8 528 (JP)**
• **NAGASAWA, Makoto,**
**c/o NSK Steering Systems Co. Ltd**
**Maebashi-shi,**
**Gunma 371-8528 (JP)**

(74) Representative: **HOFFMANN EITLE**
**Patent- und Rechtsanwälte**
**Arabellastrasse 4**
**81925 München (DE)**

(54) **UNIVERSAL JOINT**

(57)    A resistance-applying mechanism is provided in a universal joint, the mechanism causing a resistance load to an oscillating motion of a spider arm to be highest when an oscillation angle (β) is 0° and causing the resistance load to be gradually reduced as the oscillation angle deviates from the angle above. The mechanism suppresses the variation in torque transmitted between an input and an output shaft. Further, using the universal joint in an automobile steering device improves steering feeling. The resistance-applying mechanism is constituted of a cam surface (76) formed on an end surface of a spider arm (311) and an engagement projection (75) formed on an end surface of a spider arm (311) and an engagement projection (75) formed at a position eccentric from the axis of a cup bottom of a bearing cup and in contact with the cam surface. The resistance-applying mechanism can also be formed by an inner surface of a yoke hole (71) and a top end portion of the spider arm (311), both having a substantially elliptical shape.

FIG. 15

EP 1 653 101 A1

**Description**

TECHNICAL FIELD

The present invention relates to a universal joint and more particularly to a universal joint preferred for steering devices of vehicles.

BACKGROUND ART

Universal joints are coupling devices having been known long and referred to as Cardan joints, Hook's joints, or cross joints. Such universal joints are used to transmit a driving power respectively between two shafts inclined from or interlocking each other. For example, a universal joint employed for a car transmits an output, that is, a rotation power from the engine to the differential gear unit through the transmission, from the handle shaft to the body side steering device, or from the power steering device to the body side steering device. Although a universal joint is used independently as described above, two universal joints are of ten paired to be used.

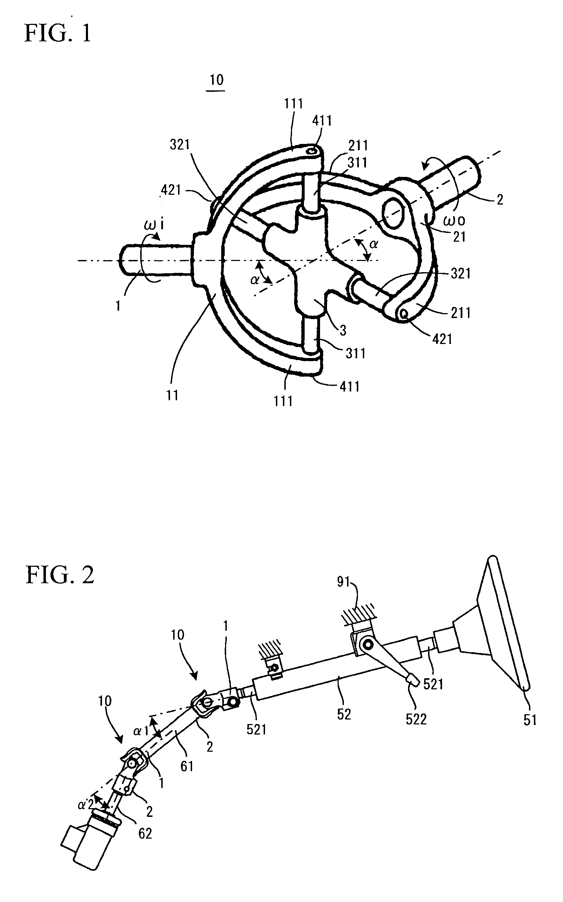

Fig. 1 shows an explanatory view of a conventional universal joint 10 for describing its outline. Two shafts (an input shaft 1 and an output shaft 2 that crosses the input shaft 1 at an angle α) are provided with yokes 11 and 21 respectively. Each yoke 11/21 is provided with two arms 111/211. The two yokes are connected to each other through a cross member 3 having four spider arms 311 and 321. Spider arms 311 that are disposed oppositely to each other are paired and received rotatably with bearings 411 at the input shaft 1 side yoke arms 111 while another pair of spider arms 321 is rotatably supported with bearings 421 at the output shaft 2 side yoke arms 211.

In the universal joint, both of the input shaft 1 and the output shaft 2 rotate together. Consequently, the total rotation distance becomes identical between those input and output shafts. In one rotation, however, the instantaneous angular speed of the output shaft 2 differs among rotation angles of the input shaft 1. Because of such a difference of the instantaneous angular speed, the transmission torque ratio will vary in one rotation, so that this transmission torque variation has been considered as a defect of universal joints.

To solve such a problem, two universal joints are usually paired to be used. Concretely, the same crossing angle is set practically for the paired universal joints and the phase of one of the universal joints is shifted by a determined angle from the phase of the other universal joint to eliminate the variation of the transmitted torque. This is a well-known technique.

The technique is effective theoretically. Actually, however, the transmission torque ratio varies according to the rotation resistance of the universal joint itself. The reason is as follows. If the cross member 3 makes an oscillating movement with respect to the yoke arms 111 and 211, a friction resistance occurs between the cross member 3 and each of the yoke arms 111 and 211. This friction resistance cannot be cancelled even with the paired universal joints. And, this friction resistance that cannot be cancelled causes the total transmission torque ratio to vary in the paired universal joints. In the case of a steering device of a vehicle, this variation of the transmission torque ratio causes the driver to receive a varied counterforce while rotating the handle and makes him feel uncomfortable.

DISCLOSURE OF THE INVENTION

Under such circumstances, it is an object of the present invention to suppress the variation in torque transmitted between input and output shafts of a universal joint and further to improve the driver's steering feeling by suppressing the variation in torque transmitted in the universal joint of a vehicle's steering device that uses this universal joint.

According to the first aspect of the present invention, the universal joint includes an input shaft, a pair of yoke arms provided for the input shaft, an output shaft, a pair of yoke arms provided for the output shaft, a cross member having four spider arms that cross each other in a cross pattern, two bearings provided between the tip parts of two spider arms, disposed oppositely to each other and two yoke arms of the above input shafts, and two bearings provided between the tip parts of the rest two spider arms, disposed oppositely to each other and two yoke arms of the output shafts. The universal joint is provided with a resistance applying mechanism that generates the maximum resistance load in oscillating of each spider arm when the axis of each of the shafts of the two spider arms is included in a plane that includes both the input shaft axis and the output shaft axis.

According to the second aspect of the present invention, the universal joint in the first aspect is modified so that at least one of the above bearings causes the resistance load to vary in accordance with the oscillating angle.

According to the third aspect of the present invention, the universal joint in the second aspect is modified so that the bearing used as the resistance applying mechanism is formed with a substantially oval yoke hole formed in the yoke arm and a substantially oval tip part of a spider arm.

According to the fourth aspect, the universal joint in the third aspect is modified so that a bearing cup is press-fit in the substantially oval yoke hole formed in the yoke arm and a plurality of needles are provided between the inner surface of the bearing cup and the substantially oval tip part of the spider arm.

According to the fifth aspect of the present invention, the universal joint in the first aspect is modified so that the resistance applying mechanism is formed with a cam surface formed at an end surface of the spider arm and an engaging projection provided at the yoke arm and coming in contact with the cam surface.

According to the sixth aspect of the present invention, the universal joint in the fifth aspect is modified so that a bearing cup is press-fit in a circular yoke hole formed in the yoke arm and a plurality of needles are provided between the inner surface of this bearing cup and the circular tip part of the spider arm and the engaging projection is formed at the bottom of the bearing cup.

According to the seventh aspect of the present invention, the universal joints in any of the first to sixth aspects are modified so that the resistance applying mechanism is provided at either of the input shaft and the output shaft.

According to the eighth aspect of the present invention, the universal joints in any of the first to sixth aspects are modified so that the resistance applying mechanism is provided at both of the input shaft and the output shaft.

The ninth aspect of the present invention is a steering device of a vehicle and the universal joint in any of the first to eighth aspects is provided between the steering column and the body side steering mechanism.

The tenth aspect of the present invention is a universal joint assembly dedicated for vehicles and two universal joints having a crossing angle equal to that of the universal joint in any of the first to eighth aspects respectively are provided and each universal joint is provided with an intermediate shaft. One of the universal joints uses the output shaft as the above described intermediate shaft and the other universal joint uses the intermediate shaft as the input shaft.

According to the universal joint of the present invention, the torque transmitted between input and output shafts is suppressed in variation and the vehicle's steering device that uses this universal joint prevents the variation in the torque transmitted in the universal joint, so that the steering feeling of the driver is improved.

BRIEF DESCRIPTION OF THE DRAWINGS

Fig. 1 is an explanatory view for describing the outline of a universal joint;

Fig. 2 illustrates the whole steering mechanism of a vehicle to which the present invention can apply;

Fig. 3 is an expanded view of the universal joint in which both of the input and output shafts are rotating;

Fig. 4 is another expanded view of the universal joint in which both of the input and output shafts are rotating;

Fig. 5 is a graph for denoting changes of an angular speed ratio $r_w$ with respect to the rotation angle $\theta$ of the input shaft 1;

Fig. 6 is a graph for denoting changes of an input shaft torque ratio when two pairs of universal joints are used, with respect to the rotation angle $\theta$ of the input shaft 1;

Fig. 7 illustrates how the posture of a cross member 3 changes (oscillates) while the cross member 3 is watched with a camera fixed to the rotating input shaft 1;

Fig. 8 is a graph for denoting a relationship between a conventional bending torque and an oscillating angle $\beta$;

Fig. 9 illustrates that a bearing 411 and a spider arm 311 are formed so as to be transformed slightly from a circle to an oval respectively;

Fig. 10 is an expanded view of a maj or portion of the bearing 411;

Fig. 11 is another expanded view of the major portion of the bearing 411;

Fig. 12 is a graph for denoting a relationship between a bending torque generated by the bearing 411 and an oscillating angle $\beta$;

Fig. 13 is a graph for denoting that the universal joint 10 to which a load is given selectively will have a fixed rotation torque;

Fig. 14 is an expanded view of a major portion of the second embodiment;

Fig. 15 is an expanded cross sectional view of a major portion of a resistance applying mechanism of the second embodiment; and

Fig. 16(A) is a top view of a cross member 3 in the third embodiment and Fig. 16(B) is a left side view of an end surface of a spider arm 311.

BEST MODE FOR CARRYING OUT THE INVENTION

Hereunder, the universal joint of the present invention will be described in detail with reference to the accompanying drawings.

First Embodiment

Fig. 2 shows the whole steering mechanism of a vehicle to which the present invention can apply. In Fig. 2, the steering mechanism is provided between a steering column and a body side steering mechanism. The steering column is fixed to a vehicle body 91 so that the inclination of the column 52 is adjusted by an adjusting lever 522. The steering column 52 supports a wheel shaft 521 that goes through the inside of the steering column 52 is rotational. A handle 51 is fixed at the top end of the wheel shaft 521. At the other end, that is, at the lower end of the steering column 52 is provided two pairs of universal joints 10.

The input shaft 1 of the upper universal joint 10 is connected to the lower end of the wheel shaft 521 and the output shaft 2 is used as an intermediate shaft 61. The lower portion of the intermediate shaft 61 is used as an input shaft 1 of another universal joint 10. The output shaft 2 of this universal joint 10 is connected to a pinion shaft 62. A pinion is fixed to the pinion shaft 62 to drive a rack shaft of the body side steering mechanism. In order to form the steering device as a power driven steering device, the steering column 52 may be provided with a power driven assist motor.

The center lines of the wheel shaft 521 and the intermediate shaft 61, as well as the center lines of the intermediate shaft 61 and the pinion shaft 62 cross each other at crossing angles $\alpha1$ and $\alpha2$ ($\alpha1 \approx \alpha2$) respectively. Hereunder, only one of the paired universal joints will be described, because the description is the same for both of the universal joints unless otherwise a description is made especially for any difference between the two universal joints.

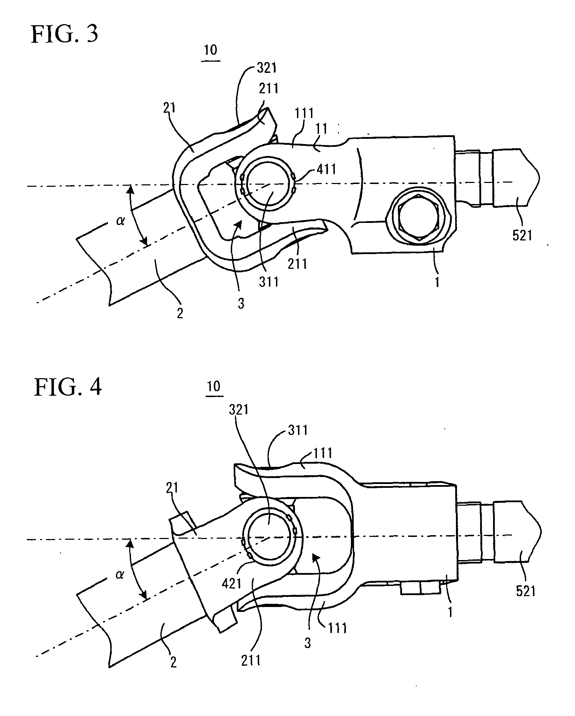

Figs. 3 and 4 show expanded views of the universal joint 10 in which the input and output shafts are rotating. In Figs. 1 and 2, the same reference numerals/symbols will be used for the same members. If the input shaft 1 rotates by 90° in the state shown in Fig. 3, the cross member 3 also rotates. The cross member 3, which is connected to the output shaft 2, changes its inclination in accordance with the rotation of the input shaft 1. The universal joint 10 thus goes into the state shown in Fig. 4. If the input shaft 1 further rotates, the universal joint 10 goes into the state shown in Fig. 3 at each rotation of 90°, then goes into the state shown in Fig. 4. In other words, each time the input shaft 1 makes a half rotation, the universal joint 10 comes in the same state repetitively. At that time, even when the input shaft 1 rotates at a constant speed, the output shaft 2 cannot rotate at a constant speed (angular speed).

If an angle (crossing angle) at which the input shaft 1 and the output shaft 2 cross each other is assumed as $\alpha$ and the input shaft 1 rotates at an angular speed of $\omega i$, it is known that the following angular speed ratio $r\omega$ exists between the angular speeds $\omega i$ and $\omega o$.

$$r_\omega \,=\, \omega o/\omega i \,=\, \cos\alpha/(1-\sin^2\theta\cdot\sin^2\alpha)$$

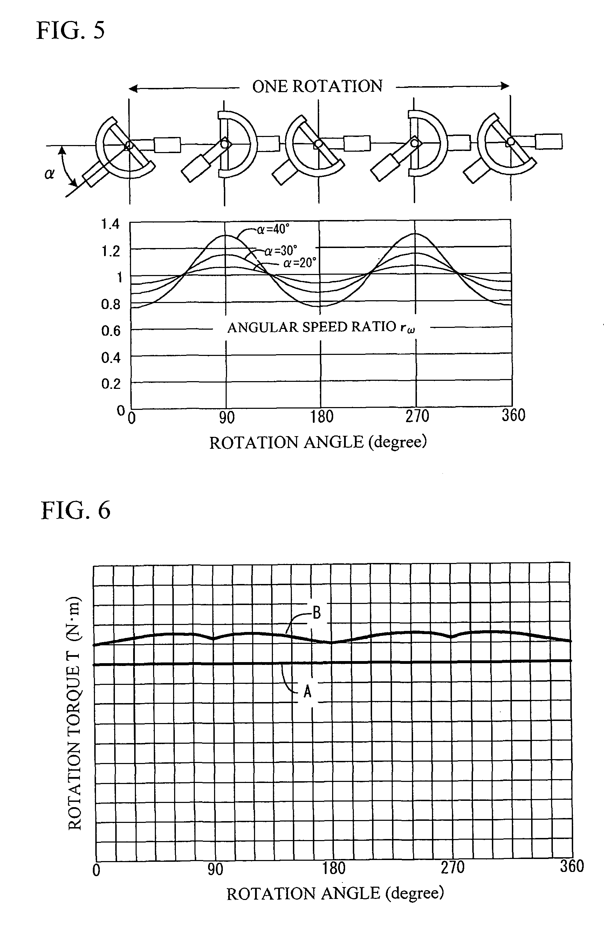

Fig. 5 shows a graph for denoting changes of the angular speed $r_\omega$ with respect to the rotation angle $\theta$ of the input shaft 1. In the upper portion of Fig. 5 is shown a posture of the universal joint. The torque transmission ratio changes in accordance with the change of the angular speed ratio $r_\omega$; the larger the crossing angle $\alpha$ is, the larger this change becomes.

The steering device of the vehicle usually uses two pair of universal joints and the phases of those universal joints are shifted from each other so that the crossing angle becomes the same practically for those universal joints, thereby this variation is eliminated. Actually, however, because the cross member 3 oscillates, the above described frictional resistance is still generated, thereby the torque will be varied.

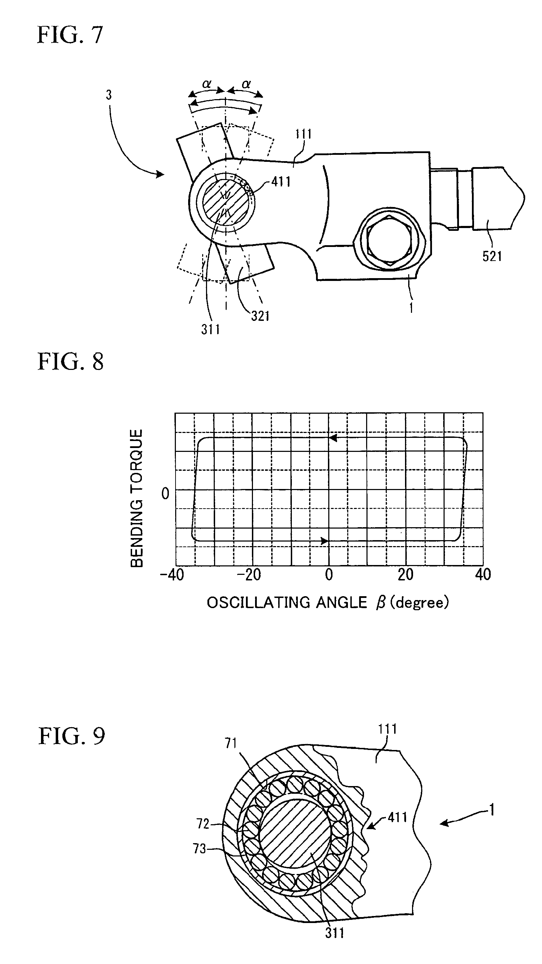

Fig. 7 shows how the posture of the cross member 3 changes (rocks) when the cross member 3 is watched from a camera fixed to the rotating input shaft 1. As shown in Fig. 7, one of the spider arms 311 of the cross member 3 is received by a bearing 411 at the input shaft 1 side yoke arm 111, so that the other spider arm 321 received by a bearing at the output shaft 2 side yoke arm 211 oscillates in the right-left direction at an amplitude of a shaft angle $\alpha$ at each rotation of the input shaft 1 and the other spider arm 321 passes the neutral position (in the vertical direction in Fig. 7) twice per rotation of the input/output shaft.

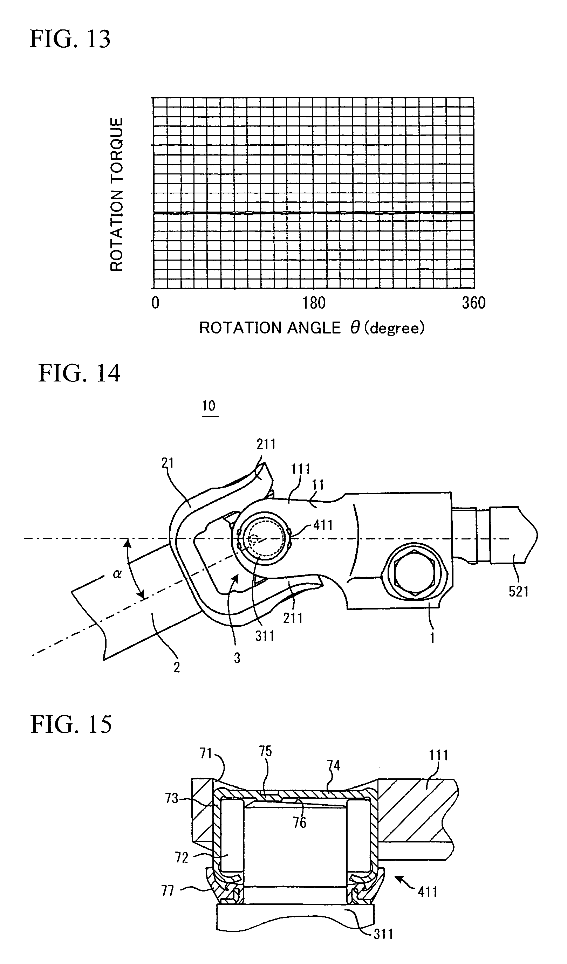

If the cross member 3 is received by the bearing 411 at the yoke arm 111, a proper pre-load is generally applied between the bearing opening end side and a seal ring 77 (see Fig. 15), as well as between the bottom of the cup of the bearing 411 and the tip of the spider arm 311. This pre-load generates a bending torque, that is, a frictional torque that prevents the cross member 3 from oscillating. Fig. 8 shows a relationship between a conventional bending torque and an oscillating angle $\beta$: the bending torque is almost fixed regardless of the oscillating angle $\beta$. A loop is drawn when the oscillating direction changes. This is because the frictional direction differs according to the oscillating direction.

This frictional torque causes a torque variation as shown in Fig. 6 (line graph B), thereby making the driver feel the steering heavy when rotating the steering handle. The line A shows an idealistic case in which the bending torque of each of the two pair of universal joints is 0 (that is, the frictional resistance is assumed to be 0) and the phases of those universal joints are shifted by a predetermined angle respectively and the crossing angle becomes the same for both universal joints.

If a selective load for preventing this oscillating of the universal joints, that is, a load resistance is given to the oscillating angle of the cross member 3, this load appears as a total one on the torque variation line graph B shown in Fig. 6.

In this first embodiment, the following mechanism is used to apply the selective load. As shown in Fig. 9, the bearing 411 and the spider arm 311 are formed almost as ovals slightly transformed from circles.

The bearing 411 is configured as follows. A substantially oval yoke hole 71 is formed in the yoke arm 111 and a bearing cup 73 is press-fit in this yoke hole 71. This press-fitting enables the inner surface (bearing surface) of the bearing cup 73 to be formed in a substantially oval shape. The tip of the spider arm 311 is also formed as a substantially oval in external view and many needles 72 are provided between the tip part of the spider arm 311 and the bearing cup 73 so that the bearing 411 is formed. Note that, however, the oval shape or substantially oval shape mentioned above does not mean a mathematical "oval" in the strict sense of the word.

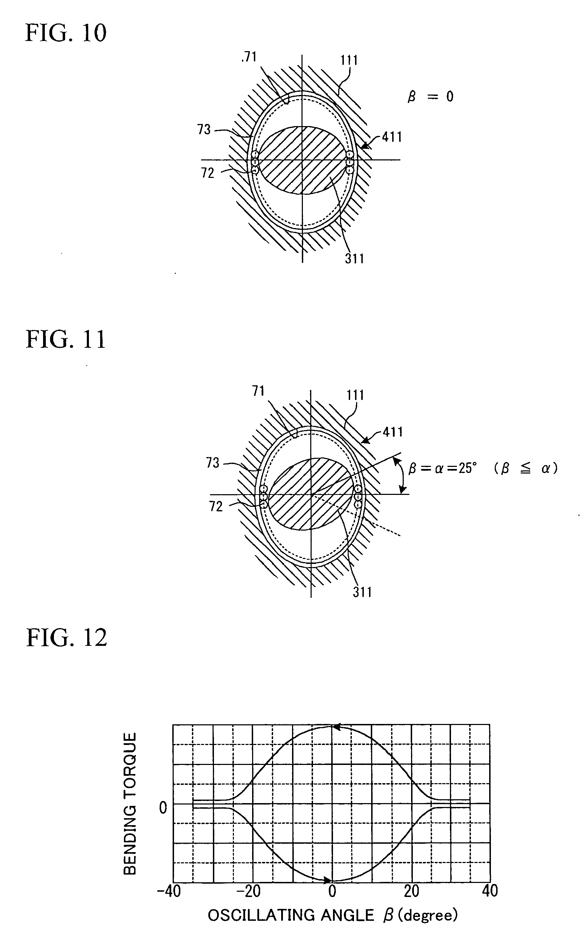

Figs. 10 and 11 show expanded views of a major portion of the bearing 411 . In Figs. 10 and 11, the maj or radial direction of the yoke hole 71 means the vertical direction (the direction orthogonal to the axis of the input shaft 1 in Figs. 10 and 11). The oval tip part of the spider arm 311 includes a long shaft formed in a direction orthogonal to a plane that includes the center line of each of the four spider arms (311, etc.) of the cross member 3.

Fig. 10 shows a relationship between the oval yoke hole 71 and the oval tip part of the spider arm 311 when the spider arm 311 is at the neutral position. In this state, the major radial direction of the oval tip part of the spider arm 311 matches with the minor radial direction of the oval yoke hole 71, so that a strong pre-load applies between them and the frictional torque becomes large. This state corresponds to that shown in Fig. 4.

Fig. 11 shows a case in which the oscillating angle $\beta$ of the cross member 3 is the maximum, that is, matches with the value of the shaft angle $\alpha$. The major radial direction of the oval tip part of the spider arm 311 inclines just by $\beta$, so that the pre-load becomes weak and the frictional torque is lowered. This state corresponds to that shown in Fig. 3.

Fig. 12 shows a relationship between a bending torque generated due to such a configuration of the bearing 411 and an oscillating angle $\beta$; the bending torque changes significantly in accordance with the oscillating angle $\beta$ and becomes the maximum when the oscillating angle $\beta$ is 0°. The characteristics (size and curve) can be adjusted in a wide range by adjusting the relationship among the sizes of the yoke hole 71, the tip part of each spider arm 311, each needle 72, as well as the shape of each oval. This embodiment can apply to a steering device that uses two pairs of universal joints to obtain the universal joint 10 having a substantially fixed rotation torque just like in the example shown in Fig. 13.

The resistance applying mechanism, when the axis of each of the two spider arms 311 is included in the plane that includes both of the axes of the input shaft 1 and the output shaft 2, causes the oscillating of the spider arm 311 (cross member 3) to generate the maximum resistance load and the load resistance (frictional torque) becomes weak gradually as the value goes away from the maximum resistance load.

Second Embodiment

In this second embodiment, the resistance applying mechanism is configured by a cam surface 76 and an engaging projection 75 while the mechanism is realized with a bearing 411 in the first embodiment. Other items in the second embodiment are all the same as those in the first embodiment, so that only the differences from the configuration in the first embodiment will be described here.

Fig. 14 shows an expanded view of a major portion of the second embodiment. Fig. 15 shows a posture corresponding to that shown in Fig. 4, which is an expanded cross sectional view of only the major portion of the resistance applying mechanism. The external shapes of the tip parts of the yoke hole 71 and the spider arm 311 are circular just like the conventional ones. A cam surface 76 is formed at an end surface of each spider arm 311. This cam surface inclines from right to left as shown in Fig. 15. At the bottom 74 of the bearing cup 74 is formed an engaging projection formed to face an inside position eccentric from the axis.

If the spider arm 311 oscillates, the engaging projection 75 comes in contact with the cam surface 76 and the maximum frictional resistance is generated at an oscillating angle $\beta$ = 0°. The friction resistance is reduced when the oscillating angle is shifted from 0°. The cam surface 76 may be not only a plane, but also a proper curved surface as shown in Fig. 15. A seal 77 is provided to protect the bearing 411 from dust invasion.

The inclination of the cam surface 76 and the curve of the curved surface can be adjusted to adjust the frictional resistance to be generated in accordance with the oscillating angle $\beta$, thereby the characteristic of the bending torque as shown in Fig. 12 can be adjusted. Consequently, as shown in Fig. 13, it is possible to substantially obtain the universal joint 10 having an almost fixed torque transmission ratio.

Third Embodiment

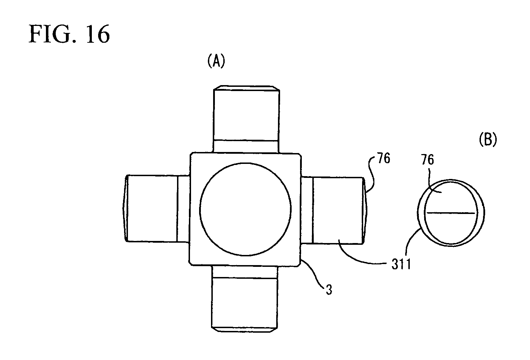

Fig. 16(A) shows a top view of a cross member 3 in this third embodiment. Fig. 16 (B) shows a left side end surface view of a spider arm 311. In this third embodiment, the end surface of the spider arm 311 is a roof-like cam surface 76 consisting of two inclinedplanes. That is only a difference from the spider arm in the second embodiment. The ridgeline is oriented in the direction orthogonal to the plane formed with four spider arms. If the spider arm 311 oscillates, the engaging projection 75 comes in contact with the cam surface 76, thereby a frictional resistance is generated and the resistance becomes the maximum at an oscillating angle β of 0°. The more the frictional resistance is reduced, the more the oscillating angle is shifted from 0° in that connection.

The inclination of each inclined plane and the height of the ridgeline can be adjusted to adjust the frictional resistance to be generated in accordance with the oscillating angle β, thereby the characteristic of the bending torque as shown in Fig. 12 can be adjusted. As a result, the present invention can obtain the universal joint 10 that substantially has an almost fixed torque transmission ratio as shown in Fig. 13.

In the above embodiments, the yoke arm and the spider arm of only one of the universal joints have been described, but the configuration disclosed above may also apply to the yoke arm and the spider arm of the other universal joint. In addition, if those universal joints are provided between the steering column and the body side steering mechanism of a vehicle and the assembly is built in the vehicle's steering device, the transmission torque variation in each of those universal joints is suppressed, thereby the steering feeling of the driver is improved during driving.

The vehicle's universal joint assembly in this embodiment includes two universal joints and an intermediate shaft and one of the universal joints uses the output shaft as an intermediate shaft while the other universal joint uses this intermediate shaft as an input shaft. The universal joint assembly can be distributed on markets and a vehicle that uses this assembly can improve the steering feeling of the driver during driving, since the transmission torque variation is suppressed in each of the universal joints.

**Claims**

1. A universal joint, comprising:

   an input shaft;
   a pair of yoke arms provided for said input shaft;
   an output shaft;
   a pair of yoke arms provided for said output shaft;
   a cross member having four spider arms, each crossing another in a cross pattern;
   two bearings provided between the tip parts of two of said four spider arms, which are disposed oppositely to each other and two yoke arms of said input shaft; and
   two bearings provided between the tip parts of the rest two of said four spider arms, which are disposed oppositely to each other and two yoke arms of said output shaft,
   wherein said universal joint further includes a resistance applying mechanism that generates the maximum resistance load in an oscillating movement of each of said two spider arms when axes of said two spider arms are included in a plane that includes the axes of both of said input and output shafts.

2. A universal joint according to claim 1,
   wherein said resistance applying mechanism is configured so that at least one of said bearings has a resistance load that varies in accordance with an oscillating angle.

3. A universal joint according to claim 2,
   wherein said bearing used as said resistance applying mechanism is formed with a substantially oval yoke hole formed in said yoke arm and a substantially oval tip part of said spider arm.

4. A universal joint according to claim 3,
   wherein a bearing cup is press-fit in said substantially oval yoke hole formed in said yoke arm and a plurality of needles are provided between the inner surface of this bearing cup and said substantially oval tip part of said spider arm.

5. A universal joint according to claim 1,
   wherein said resistance applying mechanism is configured by a cam surface formed at an end surface of said spider arm and an engaging projection provided in said yoke arm and coming in contact with said cam surface.

6. A universal joint according to claim 5,
   wherein a bearing cut is press-fit in a circular yoke hole formed in said yoke arm and a plurality of needles are provided between the inner surface of said bearing cup and a circular tip part of said spider arm, and said engaging projection is formed at the bottom of said bearing cup.

7. A universal joint according to any of claims 1 to 6,

wherein said resistance applying mechanism is provided at either of said input shaft side or output shaft side.

8. A universal joint according to any of claims 1 to 6,
   wherein said resistance applying mechanism is provided at both of said input shaft and output shaft sides.

9. A steering device for vehicle, wherein the universal joint according to any of claims 1 to 8 is provided between a steering column and a steering mechanism at the side of vehicle body.

10. A universal joint assembly for vehicle,
    including two universal joints configured according to any of claims 1 to 8 and an intermediate shaft:
    wherein both of said two universal joints have crossing angles that are substantially equal; and
    said intermediate shaft is connected to the output shaft of one of said universal joints and the output shaft of the other.

# FIG. 1

# FIG. 2

## FIG. 3

## FIG. 4

# FIG. 5

ONE ROTATION

α

1.4
1.2
1
0.8
0.6
0.4
0.2
0
0          90          180          270          360

α=40°
α=30°
α=20°

ANGULAR SPEED RATIO $r_\omega$

ROTATION ANGLE (degree)

# FIG. 6

ROTATION TORQUE T (N·m)

B

A

0          90          180          270          360

ROTATION ANGLE (degree)

10

## FIG. 7

## FIG. 8

OSCILLATING ANGLE $\beta$ (degree)

## FIG. 9

FIG. 10

$\beta = 0$

FIG. 11

$\beta = \alpha = 25°$ $(\beta \leqq \alpha)$

FIG. 12

BENDING TORQUE

0

-40  -20  0  20  40

OSCILLATING ANGLE $\beta$ (degree)

## FIG. 13

X-axis: ROTATION ANGLE $\theta$ (degree), values 0, 180, 360
Y-axis: ROTATION TORQUE

## FIG. 14

## FIG. 15

FIG. 16

(A)

(B)

76

76

311

3

## INTERNATIONAL SEARCH REPORT

International application No.

PCT/JP2004/007901

| A. CLASSIFICATION OF SUBJECT MATTER |
| --- |
| Int.Cl⁷ F16D3/40, B62D1/20 |

According to International Patent Classification (IPC) or to both national classification and IPC

| B. FIELDS SEARCHED |
| --- |
| Minimum documentation searched (classification system followed by classification symbols)<br>Int.Cl⁷ F16D3/38-3/41, B62D1/20 |

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2004 |
| Kokai Jitsuyo Shinan Koho | 1971-2004 | Toroku Jitsuyo Shinan Koho | 1994-2004 |

Electronic data base consulted during the international search (name of data base and, where practicable, search terms used)

| C. DOCUMENTS CONSIDERED TO BE RELEVANT | | |
| --- | --- | --- |
| Category* | Citation of document, with indication, where appropriate, of the relevant passages | Relevant to claim No. |
| A | JP 2002-227872 A (Unisia Jecs Corp.), 14 August, 2002 (14.08.02), Column 2, line 9 to column 4, line 36; column 5, line 37 to column 8, line 44; Figs. 1 to 11 (Family: none) | 1,2,5-8 |
| A | Microfilm of the specification and drawings annexed to the request of Japanese Utility Model Application No. 145699/1989 (Laid-open No. 84424/1991) (Atsugi Unisia Corp.), 27 August, 1991 (27.08.91), Page 1, line 5 to page 3, line 12; page 4, line 10 to page 7, line 5; all drawings (Family: none) | 1,2,5-8 |

| ☒ Further documents are listed in the continuation of Box C. | ☐ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>13 August, 2004 (13.08.04) | Date of mailing of the international search report<br>31 August, 2004 (31.08.04) |
| --- | --- |
| Name and mailing address of the ISA/<br>Japanese Patent Office | Authorized officer |
| Facsimile No. | Telephone No. |

Form PCT/ISA/210 (second sheet) (January 2004)

| | INTERNATIONAL SEARCH REPORT | International application No. |
|---|---|---|
| | | PCT/JP2004/007901 |

**C (Continuation).** DOCUMENTS CONSIDERED TO BE RELEVANT

| Category* | Citation of document, with indication, where appropriate, of the relevant passages | Relevant to claim No. |
|---|---|---|
| A | US 3660989 A  (Nadella),<br>09 May, 1972 (09.05.72),<br>Column 1, lines 33 to 42; column 2, lines 5 to 16; Figs. 1 to 3<br>& DE 2003071 A1          & FR 2029302 A5<br>& GB 1293011 A | 3,4,9 |
| A | US 4067626 A  (ROCKWELL INTERNATIONAL CORP.),<br>10 July, 1978 (10.07.78),<br>Column 1, line 51 to column 2, line 10;<br>all drawings<br>& DE 2737557 A1          & GB 1580718 A | 3,4 |
| A | JP 8-74878 A  (Toyota Motor Corp.),<br>19 March, 1996 (19.03.96),<br>Column 1, lines 10 to 18; Fig. 1<br>(Family: none) | 9,10 |

Form PCT/ISA/210 (continuation of second sheet) (January 2004)